# DEMANDE DE BREVET EUROPEEN

(11) **EP 2 816 561 A1**
(43) Date de publication de la demande: **24.12.2014**
(21) Numéro de dépôt: 14173077.0
(22) Date de dépôt: 19.06.2014
(51) Int. Cl.: G11B 11/18, H04R 23/00

(54) **Système et procédé de lecture d'un signal analogique**

(30) Priorité: 19.06.2013 FR 1301425
(71) Demandeur: Cretollier, François, 38000 Grenoble (FR)
(72) Inventeur: Cretollier, François, 38000 Grenoble (FR)
(74) Mandataire: Regimbeau

(57) **Abrégé**

Système de lecture d'un signal analogique stocké sur un support sous forme de modulation d'un sillon (1) formé dans ledit support, comprenant :
- une cellule de lecture (4) comportant un corps, un porte-pointe (3) et une pointe (2) solidaire du porte-pointe (3), un organe de transformation optique (13) étant agencé sur la pointe ou sur le porte-pointe du côté de la pointe de sorte à être rigidement solidaire de la pointe,
- une source optique monochromatique (6), agencée de sorte à émettre un faisceau lumineux incident (12) vers l'organe de transformation optique (13), ledit organe de transformation optique étant adapté pour transformer ledit faisceau lumineux incident (12) en un faisceau lumineux sortant (14) dont la phase est modifiée par une variation de position de la pointe (2),
- un système de mesure optoélectronique (7) comprenant un capteur de déplacement ou de vitesse comportant un interféromètre optique (8), adapté pour mesurer la phase relative à une référence ou une variation de la phase du faisceau lumineux sortant (14) et pour générer, à partir de ladite mesure, un signal électrique modulé (16) correspondant au signal analogique codé dans la modulation du sillon (1),
- un dispositif de transmission optique (10) comprenant une fibre optique agencée pour transmettre le faisceau lumineux sortant (14) au système de mesure optoélectronique (7).

## Description

### DOMAINE DE L'INVENTION

La présente invention concerne un système et un procédé de lecture d'un signal analogique stocké sur un support sous forme de modulation d'un sillon, en particulier sur un disque vinyle audio.

### ARRIERE PLAN DE L'INVENTION

Il existe un patrimoine important de tels supports, liés à l'histoire du développement de la reproduction sonore, sous forme de cylindres phonographiques, de disques à sillons larges comme les 78 tours, puis de disques microsillons mono ou stéréo.

Les systèmes pour lire le signal stocké sur de tels supports consistent d'une part en un système de suivi du sillon, la forme exacte du sillon étant par nature a priori inconnue puisqu'il s'agit de la lire, et d'autre part en un générateur ou modulateur qui transforme les variations du sillon en un signal électrique.

La plupart des supports utilisés sont des disques vinyles.

Dans l'immense majorité des cas, le système de suivi du sillon est mécanique : une pointe, en général en diamant, est montée de façon rigide sur un système porte-pointe, en général un cantilever, lequel est relié au corps d'une cellule de lecture en conservant deux degrés de liberté angulaires.

La cellule est elle-même montée sur un bras mobile.

Lorsque le diamant est mis en contact avec le sillon, le bras suit les mouvements très basses fréquences du sillon, typiquement inférieures à 15 Hz, et maintient de ce fait la cellule au-dessus du centre du sillon ce qui réalise une fonction de suivi de sillon extrêmement économe et efficace.

D'autre part le stylet formé du diamant et du cantilever suit les modulations plus hautes fréquences du sillon, ce qui crée un mouvement relatif entre le cantilever et le corps de la cellule.

La longueur du cantilever doit être égale à la longueur du cantilever qui a été utilisé pour graver le support, sous peine de créer de la distorsion.

Ce mouvement relatif est la source d'un générateur.

Dans la quasi-totalité des cellules utilisées de nos jours, cette fonction de générateur est réalisée par électrodynamique : une tension est créée par effet d'induction électromagnétique du fait du mouvement relatif entre des bobines d'une part et un ou des aimants ou des matériaux ferromagnétiques placés dans un champ magnétique d'autre part.

Selon l'architecture implémentée, on parlera de cellules à aimant mobile, de cellules à réluctance variable, de cellules à bobines mobiles etc.

Ce système générateur, dont une partie doit être solidaire du cantilever, est éloigné de la pointe, d'une part afin de limiter l'impact sur le moment d'inertie total de l'ensemble mobile, et d'autre part à cause de la contrainte du volume du système générateur.

Comme le cantilever n'est pas parfaitement rigide, il y a inévitablement une déformation du cantilever soumis à la force d'appui qu'exerce le sillon, qui va engendrer à partir de la pointe la propagation d'une onde vers l'autre extrémité du cantilever.

Le signal vu à l'extrémité du cantilever par l'élément actif du générateur n'est donc pas parfaitement fidèle au mouvement de la pointe : comme pour tout système de transmission mécanique, la réponse en fréquence présente une fréquence de coupure, éventuellement avec une résonance, généralement autour de 10 ou 15 KHz, accompagnée d'un déphasage.

Cet effet de déformation du cantilever, s'il est négligeable à basse fréquence, crée cependant une distorsion audible à haute fréquence.

Certains fabricants essaient d'améliorer le montage mécanique pour repousser cette fréquence de coupure ou de résonance au-delà de la bande audible afin de réduire le gain ou l'atténuation de l'intensité du signal dans la bande de fréquence, néanmoins, comme le déphasage commence à se faire sentir plusieurs octaves en dessous de la fréquence de coupure ou de résonance, il demeure dans toutes ces cellules un impact non négligeable sur la reproduction sonore du à ce déphasage, notamment parce que les transitoires s'en trouvent altérés.

Par ailleurs, la plupart des cellules de très haut de gamme sont des cellules à bobines mobiles à très faible niveau de sortie, de l'ordre de quelques centaines de µV.

Avec ces cellules électrodynamiques, le signal électrique est généré par l'effort du sillon sur le stylet et est donc extrêmement faible.

Par ailleurs, ce signal étant généré dans la cellule fixée au bout du bras de lecture de la platine tourne-disque, il doit être transmis à travers la connectique de la cellule, les fils très fins qui courent à l'intérieur du bras de lecture, la soudure avec le câble de modulation, le câble de modulation qui représente en général 1 m de longueur, et enfin la connectique avec le pré-ampli phono, avant de pouvoir être amplifié.

Cette ligne de transmission étendue fait antenne et représente une source de bruit par captation des bruits électromagnétiques environnants.

Comme de plus le signal très faible nécessite un facteur d'amplification très important, ce type de cellule, une fois inséré dans l'ensemble de la chaîne de reproduction sonore, ne permet pas d'obtenir d'excellents rapports signal à bruit.

Par ailleurs, les cellules à bobines mobiles à très bas niveau doivent être connectées à des entrées pré-ampli à relativement faible impédance, typiquement 100 ohms, ce qui rend le signal particulièrement sensible à l'inductance interne de ces cellules d'une part, ainsi qu'à toutes les inductances et capacités parasites de la connectique et de l'ensemble de câbles d'autre part, puisque celles-ci ne sont plus négligeables dans l'impédance totale du circuit électrique et jouent donc un rôle de filtre et altèrent le signal analogique.

Par ailleurs, en cas de lecture stéréo, la séparation des canaux gauche et droite est assez limitée et atteint difficilement 35 dB à 1 KHz et 25 dB à 20 KHz du fait notamment de l'influence mutuelle entre les deux circuits électromagnétiques confinés dans le très faible espace autour de l'extrémité du cantilever.

Cette séparation des canaux assez moyenne se traduit en une image stéréo dégradée.

Il existe également un système de lecture de disque entièrement optique, sans contact avec le disque, dont l'architecture est décrite dans les documents US4870631 et US4972344, qui consiste d'une part à réaliser une fonction de suivi du sillon de façon entièrement optique afin de se passer de la pointe en contact avec le sillon, et d'autre part à réaliser une lecture du signal de modulation en envoyant un faisceau laser directement sur chacun des flancs du sillon, chacun réfléchissant le faisceau dans une direction fonction de l'angle que fait le sillon par rapport à la direction radiale du disque, cet angle reflétant la modulation, la position du faisceau réfléchi étant détectée par un senseur de position.

Ce système n'est pas compatible avec les platines tourne-disques existantes et nécessite une platine dédiée, au prix très élevé du fait de la complexité de réaliser la fonction de suivi du sillon de façon entièrement optique.

Par ailleurs, ce système de lecture, s'il présente l'avantage de ne pas user le disque par absence de tout contact, présente par contre l'inconvénient de générer un signal audio pollué par énormément de craquements et de bruit haute fréquence en présence de la moindre poussière, alors que les systèmes de lecture classiques limitent de fait ces phénomènes, la pointe de lecture poussant une bonne partie de la poussière devant elle ou en dehors du sillon.

Par ailleurs, ce système ne permet pas de lire les supports dont le sillon est en forme de U, dont notamment les disques 78 tours.

Ce système ne permet pas non plus de lire les disques transparents ou colorés car ceux-ci ne reflètent pas convenablement la lumière laser utilisée.

Il existe un également un système de lecture par optique dont l'architecture est décrite dans le document US3534181, utilisant la variation d'angle d'un miroir fixé sur le cantilever à l'extrémité opposée de la pointe, et une détection du signal par mesure de la quantité de lumière réfléchie dans une direction donnée.

Ce système est sensible aux déformations mécaniques du cantilever lorsque celui-ci doit transmettre les oscillations haute fréquence de la pointe, ce qui empêche le système d'avoir une réponse plate en fréquence.

Par ailleurs, ce système utilise un faisceau lumineux émis par un guide de lumière, ledit faisceau en espace libre présentant une répartition spatiale non homogène de l'intensité lumineuse, classiquement de forme gaussienne en deux dimensions autour de l'axe d'émission, cette fluctuation de l'intensité lumineuse selon la direction engendrant inévitablement à la fois un défaut de linéarité de la réponse, mais également créant un phénomène de diaphonie d'une voie sur l'autre dans le cas d'une lecture stéréo, engendrant ainsi un système de lecture de piètre qualité acoustique.

Il existe donc un besoin pour un système de lecture d'un support stockant des signaux analogiques codés sous forme de modulation d'un sillon formés dans ledit support, notamment les disques vinyles 78 tours monophoniques constitués de sillons larges en forme de U modulés horizontalement et les disques vinyles stéréos constitués de microsillons en forme de V modulés verticalement et horizontalement, qui soit également compatible avec les platines tourne-disque existantes, qui utilise un mécanisme simple de suivi du sillon, qui permette d'être insensible aux micro-déformations du cantilever en permettant de lire les modulations au plus près du sillon c'est-à-dire à proximité de la pointe de lecture et non pas à l'autre extrémité du cantilever où le signal aura été déformé.

Il existe également un besoin pour un système de lecture qui amplifie le signal directement à l'endroit où le signal électrique est généré c'est-à-dire avant transmission par des câbles, afin d'améliorer le rapport signal à bruit et de réduire les distorsions.

Il existe également un besoin d'un système de lecture de très grande linéarité, là encore pour réduire la distorsion.

Il existe enfin un besoin pour un système de lecture qui présente une excellente séparation des canaux pour la lecture des supports stéréo.

### BREVE DESCRIPTION DE L'INVENTION

L'invention a pour but de répondre à ce besoin.

L'invention permet de lire de tels supports, en fournissant un signal de sortie à haut niveau, extrêmement peu bruité et extrêmement fidèle au signal présent sur le support. L'invention a pour objet un système de lecture d'un signal analogique stocké sur un support sous forme de modulation d'un sillon formé dans ledit support, comprenant :
- une cellule de lecture comportant un corps, un porte-pointe et une pointe solidaire du porte-pointe, un organe de transformation optique étant agencé sur la pointe ou sur le porte-pointe du côté de la pointe de sorte à être rigidement solidaire de la pointe, ledit porte-pointe possédant deux degrés de liberté par rapport au corps de la cellule auquel il est relié, permettant à la pointe de suivre les modulations du sillon lorsque ladite pointe est mise en contact avec le sillon,
- une source optique monochromatique,

ladite source optique étant agencée de sorte à émettre un faisceau lumineux incident vers l'organe de transformation optique, ledit organe de transformation optique étant adapté pour transformer ledit faisceau lumineux incident en un faisceau lumineux sortant dont la phase est modifiée par une variation de position de la pointe,
- un système de mesure optoélectronique comprenant un capteur de déplacement ou de vitesse comportant un interféromètre optique,
   ledit système optoélectronique étant adapté pour mesurer la phase du faisceau lumineux sortant relativement à une référence, ou une variation de cette phase, et pour générer, à partir de ladite mesure, un signal électrique modulé correspondant au signal analogique codé dans la modulation du sillon.
- un dispositif de transmission optique comprenant une fibre optique agencée pour transmettre le faisceau lumineux sortant au système de mesure optoélectronique.

Selon un mode de réalisation de l'invention, l'organe de transformation optique comprend une surface plane réfléchissante adaptée pour réfléchir le faisceau incident pour générer le faisceau de sortie.

Selon un mode de réalisation de l'invention, l'aire de la surface réfléchissante de l'organe de transformation optique est comprise entre 0,02 et 0,25 mm².

Selon un mode de réalisation de l'invention, l'organe de transformation optique est agencé à l'extrémité du porte-pointe où se situe la pointe, sur la partie supérieure du porte-pointe, en étant orienté à 45° par rapport à la verticale.

Dans le présent texte, le terme « vertical » correspond à l'orientation de la pointe dans la position normale d'utilisation, le support étant entraîné en rotation dans un plan horizontal. Le terme « supérieur » désigne par conséquent un emplacement plus élevé dans la direction verticale.

Selon un mode de réalisation de l'invention, la source optique est extérieure à la cellule de lecture et le système comprend une fibre optique agencée pour transmettre le faisceau incident de la source vers la cellule de lecture.

Selon un mode de réalisation de l'invention, le système de lecture est adapté pour la lecture d'un signal stéréo codé sous la forme d'un sillon modulé dans une première et une seconde directions, caractérisé en ce qu'il comprend deux organes de transformation optique et en ce que le système de mesure optoélectronique est adapté pour analyser :
- un premier faisceau sortant d'un premier organe de transformation optique dont la phase est modifiée par une variation de position de la pointe dans la première direction, et
- un second faisceau sortant d'un second organe de transformation optique dont la phase est modifiée par une variation de position de la pointe dans la seconde direction.

Selon un mode de réalisation de l'invention, le système comprend deux sources optiques et deux systèmes de mesure optoélectroniques pour traiter chacun une des deux modulations, et chaque organe de transformation optique comprend en outre une surface plane réfléchissante adaptée pour réfléchir respectivement le faisceau incident provenant de chaque source pour générer le faisceau de sortie respectif.

Selon un mode de réalisation de l'invention, lesdites sources optiques et/ou organes de transformation optique et/ou systèmes de mesure optoélectroniques sont imbriqués de sorte à partager des composants pour générer les faisceaux lumineux incidents, pour transformer les faisceaux lumineux incidents en faisceaux lumineux sortants, pour mesurer les phases relativement à une référence et/ou variations des phases des faisceaux lumineux sortants, et/ou pour générer les signaux électriques modulés.

L'invention comprend également un procédé de lecture d'un signal analogique stocké sur un support sous forme de modulation d'un sillon formé dans ledit support, comprenant :
- la mise en rotation du support,
- la mise en contact d'une pointe d'une cellule de lecture avec le sillon, ladite pointe étant solidaire d'un porte-pointe, un organe de transformation optique étant agencé sur la pointe ou sur le porte-pointe du côté de la pointe de sorte à être rigidement solidaire de la pointe, ledit porte-pointe possédant deux degrés de liberté par rapport au corps de la cellule auquel il est relié, permettant à la pointe de suivre les oscillations du sillon,
- l'émission d'un faisceau lumineux incident vers l'organe de transformation optique, ledit organe transformant le faisceau lumineux incident en un faisceau lumineux sortant dont la phase est modifiée par une variation de position de la pointe,
- la transmission, par un dispositif de transmission optique comprenant une fibre optique, du faisceau lumineux sortant à un système de mesure optoélectronique comprenant un capteur de déplacement ou de vitesse comportant un interféromètre optique,
- la mesure, par ledit système de mesure, de la phase relativement à une référence ou d'une variation de la phase du faisceau lumineux sortant et la génération, à partir de ladite mesure, d'un signal électrique modulé correspondant au signal analogique codé dans la modulation du sillon.

L'invention comprend également un procédé de lecture stéréo selon le procédé précédent et pour lequel la vitesse de rotation du support est de 33 tr/min ou de 45 tr/min.

L'invention répond ainsi aux besoins énoncés. Ce système de lecture est compatible de tous les types de modulation horizontal et vertical, et des formes de sillon en forme de U ou de V, le procédé de suivi du sillon est très simple et correspond au procédé habituel, ce qui rend l'invention compatible des platines de lecture existantes.

Par ailleurs, l'invention peut permettre de venir lire le signal directement sur la pointe, ou à très grande proximité de la pointe, ainsi l'invention permet de s'affranchir des déformations du porte-pointe à haute fréquence, on obtient ainsi un système de lecture avec une meilleure bande passante et une meilleure réponse en fréquence, que ce soit en gain ou en phase.

Par ailleurs, l'invention permet, grâce à l'utilisation d'une transmission optique, par exemple par fibre, de transporter le signal utile de la cellule vers un système de mesure optoélectronique où le signal pourra être directement amplifié juste après avoir été généré sous forme électrique, dans un boîtier protégé des perturbations extérieures, sans passer auparavant par tout un ensemble de câbles et de connexions.

On dispose ainsi d'un système de lecture qui permet de générer le signal attendu à fort niveau, avec un excellent rapport signal à bruit, ce qui garantit une meilleure intégrité du signal lors d'une transmission ultérieure par câbles.

Par ailleurs, le système de mesure optoélectronique étant basé sur un interféromètre capable de travailler sur la phase du signal lumineux indépendamment de la fluctuation de puissance du faisceau lumineux sortant, il est possible de garantir une excellente linéarité du système de lecture.

L'invention permet de lire la modulation du sillon avec une extrême précision, les méthodes de mesure optique utilisant l'interférométrie permettant de mesurer une variation de position relative de l'ordre du nm, et ce jusqu'à des fréquences très supérieures aux fréquences acoustiques, ce qui par exemple dans le cas des microsillons vinyles est superfétatoire car largement plus précis que la précision de gravure, celle-ci n'étant précise qu'à plusieurs dizaines de nm près.

Par ailleurs, dans le cas de lecture d'enregistrements stéréos, la détection des deux modulations étant optique sur chacun des canaux, il n'y a pas de perturbation mutuelle entre les deux faisceaux réfléchis, et l'on peut avoir deux générateurs parfaitement séparés, de ce fait la séparation des canaux ne dépend plus que des organes de transformation optique.

Dans le cas de l'utilisation de deux surfaces planes réfléchissantes, un état de surface de qualité et une orientation contrôlée permettent ainsi d'obtenir une très faible diaphonie, donc une excellente séparation des canaux.

### BREVE DESCRIPTION DES DESSINS

D'autres caractéristiques et avantages de l'invention ressortiront de la description détaillée qui va suivre, en référence aux dessins annexés sur lesquels :
- la figure 1 illustre schématiquement les modulations pour les canaux gauche et droite dans le cas d'un disque vinyle microsillon stéréo ;
- la figure 2 illustre schématiquement une modulation horizontale du sillon ;
- la figure 3 illustre schématiquement une modulation verticale du sillon ;
- la figure 4 illustre un mode particulier de réalisation de l'invention permettant de lire une modulation horizontale, adaptée à la lecture d'anciens enregistrements monophoniques dont la bande passante est restreinte dans les hautes fréquences, la cellule de lecture étant représentée de face ;
- la figure 5 présente une vue de face de la cellule de lecture selon un mode particulier de réalisation de l'invention permettant de lire la modulation horizontale d'un enregistrement monophonique, où l'organe de transformation optique est une micro-surface plane réfléchissante sur la pointe ;
- la figure 6 présente une vue de côté de la cellule de lecture selon un mode de réalisation de l'invention, montrant le canal de lecture gauche, la cellule étant montée à l'extrémité d'un bras de lecture ;
- la figure 7 illustre un mode particulier de réalisation de l'invention où deux générateurs sont utilisés pour lire chacun l'un des deux canaux stéréo codés dans un sillon, la cellule de lecture étant représentée de face.

### DESCRIPTION DETAILLEE DE MODES DE REALISATION DE L'INVENTION

L'invention propose un système de lecture d'un signal analogique stocké sur un support sous forme de modulation d'un sillon formé dans ledit support.

Le support est avantageusement un disque vinyle, mais il peut aussi s'agir d'un cylindre phonographique.

Une cellule de lecture, comportant un corps, un porte-pointe et une pointe solidaire du porte-pointe, ledit porte-pointe possédant deux degrés de liberté par rapport au corps de la cellule auquel il est relié, permet à la pointe de suivre les modulations du sillon lorsque ladite pointe est mise en contact avec le sillon.

La pointe est avantageusement un diamant taillé de façon adaptée à la géométrie du sillon, et le porte-pointe est avantageusement un cantilever.

Ladite pointe ou ledit porte-pointe comprend en outre un organe de transformation optique, cet organe faisant partie de la pointe ou étant agencé sur le porte-pointe du côté de la pointe de sorte à être rigidement solidaire de la pointe dans toute la bande de fréquence du signal qui devra être transmis depuis la pointe, ledit organe de transformation optique étant alors forcément de taille extrêmement réduite.

L'organe de transformation optique est, selon le mode de réalisation de l'invention, avantageusement une surface réfléchissante du porte-pointe ou de la pointe, ou un micro-miroir.

Une source optique monochromatique est agencée de sorte à émettre un faisceau lumineux incident vers l'organe de transformation optique. Par « monochromatique », on entend dans le présent texte une source lumineuse présentant une largeur de spectre inférieure ou égale à quelques dizaines de GHz centré sur une longueur d'onde donnée.

La source optique monochromatique est avantageusement un laser de longueur de cohérence d'au moins quelques cm.

Ledit organe de transformation optique est adapté pour transformer ledit faisceau lumineux incident en un faisceau lumineux sortant dont la phase est modifiée par une variation de position de la pointe.

Ledit faisceau lumineux sortant est transmis à un système de mesure optoélectronique.

La transmission du faisceau lumineux sortant vers le système de mesure optoélectronique se fait à travers une fibre optique.

Ledit système de mesure optoélectronique, qui comprend un capteur de déplacement ou de vitesse comportant un interféromètre optique, est adapté pour mesurer la phase du faisceau lumineux sortant relativement à une référence, ou une variation de cette phase, et pour générer, à partir de ladite mesure, un signal électrique modulé correspondant au signal analogique codé dans la modulation du sillon.

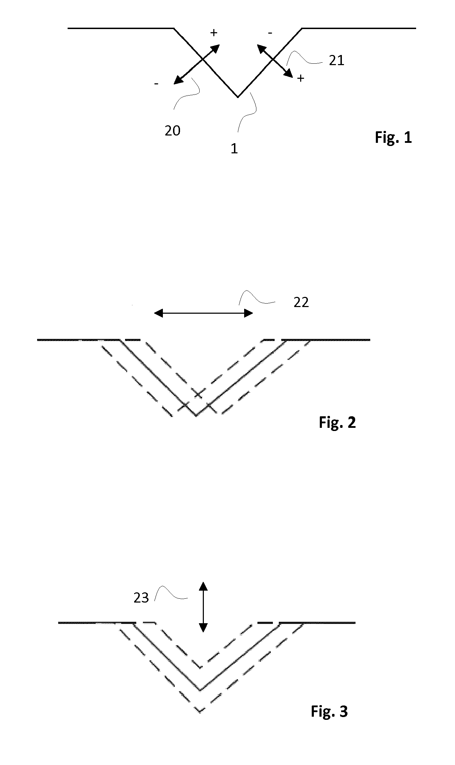

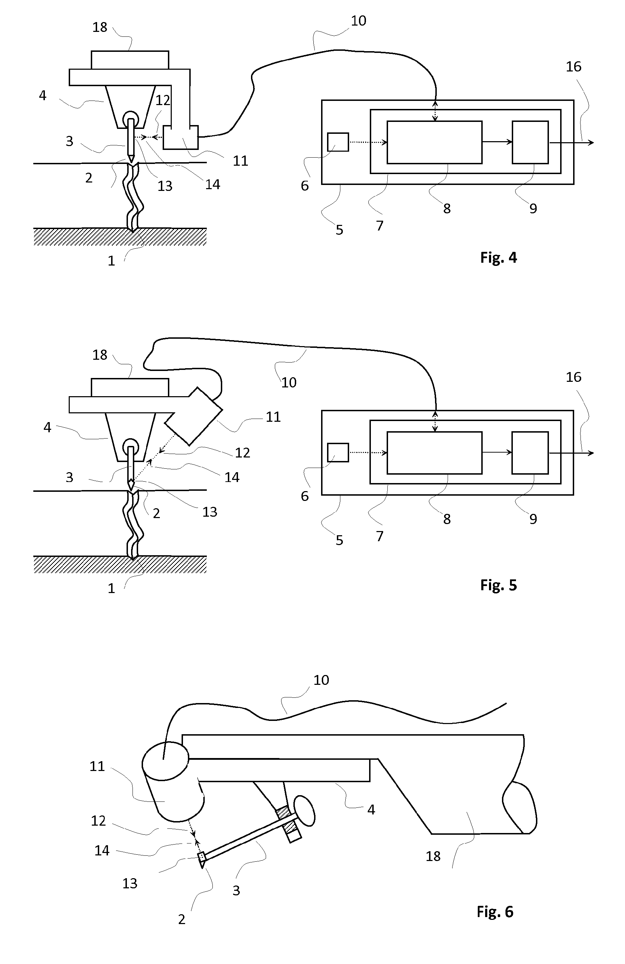

Dans un mode de réalisation particulier, illustré sur la figure 4, le système est un système de lecture pour disque vinyle monophonique, où le signal est stocké sous forme d'une modulation horizontale 22 comme représenté à la figure 2.

La cellule de lecture 4 est montée sur un bras de lecture 18, permettant la mise en contact de la pointe 2 avec le sillon 1.

Une source optique 6 comprenant un laser émet un faisceau optique monochromatique, lequel est séparé en deux faisceaux par un interféromètre 8, l'un des faisceaux étant utilisé comme signal de référence, l'autre faisceau étant transmis par une fibre optique 10 vers la cellule de lecture 4 jusqu'à un dispositif optique 11 qui dirige le faisceau incident 12 vers l'organe de transformation optique 13, lequel consiste en une surface verticale réfléchissante du porte-pointe rigidement solidaire de la pointe.

Dans ce mode de réalisation, cette surface réfléchissante est à une certaine distance de la pointe, ce qui nécessiterait un porte-pointe de fort diamètre et donc de masse conséquente pour conserver la rigidité mécanique à haute fréquence. Par conséquent, dans un objectif de limiter la masse et l'encombrement du système, ce mode de réalisation est plus particulièrement adapté à la lecture des anciens disques monophoniques dont le signal est dépourvu de très hautes fréquences.

La direction du faisceau incident 12 est normale à cette surface réfléchissante, de sorte que le faisceau sortant 14 est un faisceau réfléchi dans la même direction que le faisceau incident mais en sens inverse.

Le faisceau sortant 14 repasse donc dans le dispositif optique 11 et est transmis à travers la fibre optique 10 jusqu'au l'interféromètre 8.

Par rapport au faisceau de référence, le faisceau sortant 14 aura subi un déphasage fonction notamment de la distance entre le dispositif optique 11 et la surface réfléchissante du porte-pointe rigidement solidaire de la pointe, donc fonction de la modulation du sillon.

Le système de mesure optoélectronique 7, en suivant le déphasage créé par l'interféromètre 8 et grâce à une électronique de traitement 9, mesure la vitesse relative entre l'organe de transformation optique 13 et le dispositif optique 11, et génère, en l'ayant amplifié, le signal électrique modulé de sortie 16 correspondant au signal phono attendu.

Un montage interférométrique permet de mesurer la phase indépendamment de la fluctuation de puissance lumineuse captée par la fibre optique et issue du faisceau sortant, ce qui permet d'obtenir une excellente linéarité du système de lecture.

Par ailleurs, un montage interférométrique permet de mesurer une variation de position relative de l'ordre du nm, et ce jusqu'à des fréquences bien supérieures aux fréquences acoustiques, ce qui par exemple dans le cas des microsillons vinyles est superfétatoire car largement plus précis que la précision de gravure, celle-ci n'est précise qu'à plusieurs dizaines de nm près.

On dispose ainsi d'un signal phono de très grande qualité, avec un niveau de sortie élevé et un excellent rapport signal à bruit, ce qui garantit une excellente intégrité du signal non seulement en sortie du système mais également après transmission ultérieure par câbles.

De manière optionnelle, l'électronique de traitement 9 effectue la correction RIAA du signal phono, c'est-à-dire la correction conforme au standard de la Recording Industry Association of America.

Un autre mode de réalisation particulier est illustré par la figure 5, où l'organe de transformation optique 13 est une surface plane réfléchissante sur la partie supérieure de la pointe, orientée à 45° par rapport à la verticale.

Le dispositif optique 11 est adapté de façon à ce que le faisceau incident 12 soit normal à cette surface.

La modulation étant horizontale, le point d'incidence du faisceau incident 12 sur la surface plane réfléchissante 13 va parcourir un lieu géométrique qui aura la forme d'un segment, et la vitesse de modulation mesurée par le système de mesure optoélectronique sera affectée d'un facteur d'échelle valant cos(45°).

On dispose ainsi d'un système de lecture capable de venir mesurer la modulation au plus près du sillon, c'est-à-dire directement sur la pointe, ce qui rend le faisceau sortant 14 et donc le signal modulé 16 insensibles aux micro-déformations du porte-pointe.

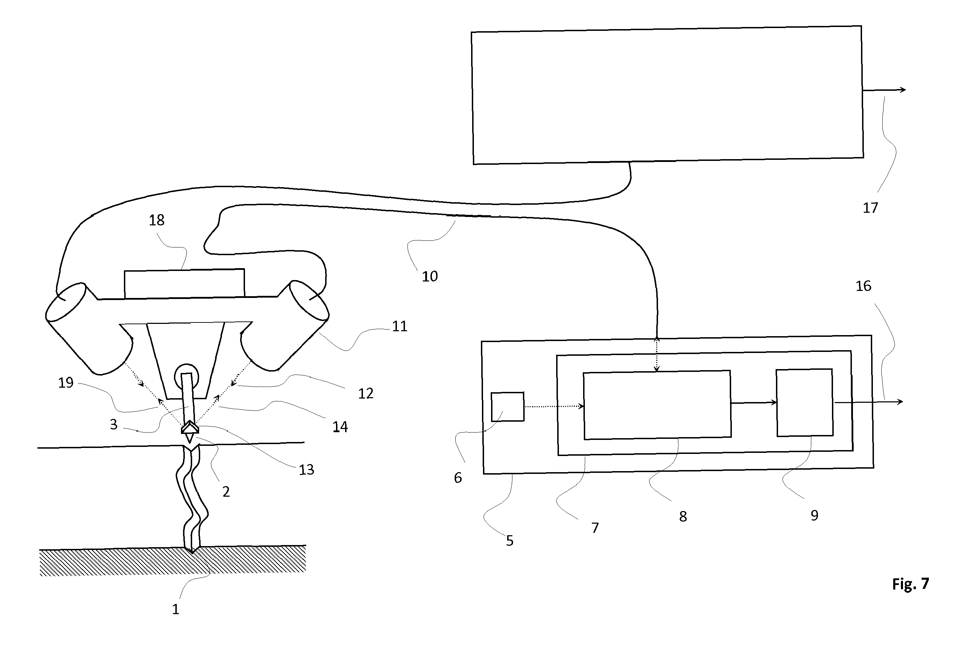

Dans un mode de réalisation particulier, illustré à la figure 7, le système de lecture est un système de lecture pour disque microsillon stéréo.

Pour un disque microsillon stéréo, la direction de modulation 20 indiquée à la figure 1 correspond au canal gauche, et la direction de modulation 21 correspond au canal droit, donc la modulation horizontale 22 correspond au mode commun des deux canaux droite et gauche, et la modulation verticale 23 correspond au mode différentiel.

Le système comporte une cellule de lecture 4 comportant une pointe de lecture 2 en diamant, montée sur un porte-pointe 3, et au-dessus de la pointe sont fixés deux organes de transformation optique qui comprennent chacun un micro-miroir.

Le premier micro-miroir est orthogonal à la direction de modulation 20 du canal gauche, le second micro-miroir est orthogonal à la direction de modulation 21 du canal droit.

Le reste du système est dupliqué.

Un premier sous-ensemble source 6, fibre 10, et dispositif optique 11 génère un premier faisceau incident 12 sur le premier micro-miroir, orthogonal à la direction de modulation 20, lequel crée par réflexion un premier faisceau sortant 14, transmis par ledit dispositif optique et ladite fibre jusqu'au premier système de mesure optoélectronique 7, lequel génère à partir dudit faisceau sortant le signal électrique modulé 16 correspondant au signal codé par la modulation 20, c'est-à-dire le canal gauche.

Un second sous-ensemble source, fibre et dispositif optique génère un second faisceau incident sur le second micro-miroir, orthogonal à la direction de modulation 21, lequel crée par réflexion un second faisceau sortant 19, transmis par ledit dispositif optique et ladite fibre jusqu'au second système de mesure optoélectronique, lequel génère à partir dudit faisceau sortant le signal électrique modulé 17 correspondant au signal codé par la modulation 21, c'est-à-dire le canal droit.

Du fait de la modulation 21 du canal droit, le point d'incidence du faisceau incident 12 sur le micro-miroir utilisé pour le sous-système dédié au canal gauche va parcourir un lieu géométrique qui aura la forme d'un segment, de 100 µm de longueur typiquement, ce qui est source de diaphonie si l'état de surface du micro-miroir n'est pas parfait ou si le micro-miroir n'est pas parfaitement orienté.

De la même manière, la modulation 20 du canal gauche fera varier le point d'incidence sur le second micro-miroir, utilisé par le sous-système dédié au canal droit.

Il n'y a pas d'autre élément commun entre les deux sous-systèmes, l'architecture étant en double-mono.

La géométrie des deux micro-miroirs est donc la seule source possible de diaphonie.

Un micro-miroir avec un état de surface présentant des variations de pente inférieures de 1% sur le segment de 100 µm balayé par le faisceau incident créera une diaphonie inférieure à -40 dB, quelle que soit la fréquence, et ce sans compter l'amélioration supplémentaire apportée par le moyennage spatial lié à l'empreinte non nulle du faisceau sur le micro-miroir, laquelle atteint typiquement une taille d'une dizaine ou de quelques dizaines de microns.

Une erreur d'orientation d'un micro-miroir de 0,5° crée quant à elle une diaphonie inférieure à -40 dB, et ce quelle que soit la fréquence.

L'utilisation optionnelle d'une combinaison linéaire des signaux en sortie des générateurs permet en outre de corriger une erreur résiduelle d'orientation due au montage des micro-miroirs.

On obtient ainsi un système de lecture offrant une séparation des canaux meilleure qu'avec les technologies traditionnelles de lecture électrodynamiques.

De manière optionnelle, les sources optiques et/ou les organes de transformation optique et/ou les systèmes de mesure optoélectroniques sont imbriqués de sorte à partager des composants pour générer les faisceaux lumineux incidents, pour transformer les faisceaux optiques incidents en faisceaux optiques sortants, pour mesurer la phase des faisceaux lumineux sortants, et/ou pour générer les signaux électriques modulés.

### REFERENCES

Brevet US4870631 : Optical turntable system with reflected spot position détection, déposé le 30 mai 1986 par Finial Technology, Inc., publié le 26 septembre 1989.
Brevet US4972344 : Dual beam optical turntable, déposé le 4 novembre 1988 par Finial Technology, Inc., publié le 20 novembre 1990.
Brevet US3534181 : Pivotai tone arm with light beam pickup, déposé le 6 mai 1968 par Heinrich Zimmerman, publié le 13 octobre 1970.

## Revendications

1. Système de lecture d'un signal analogique stocké sur un support sous forme de modulation d'un sillon (1) formé dans ledit support, comprenant :
- une cellule de lecture (4) comportant un corps, un porte-pointe (3) et une pointe (2) solidaire du porte-pointe (3), un organe de transformation optique (13) étant agencé sur la pointe ou sur le porte-pointe du côté de la pointe de sorte à être rigidement solidaire de la pointe, ledit porte-pointe (3) possédant deux degrés de liberté par rapport au corps de la cellule auquel il est relié, permettant à la pointe (2) de suivre les modulations du sillon (1) lorsque ladite pointe (2) est mise en contact avec le sillon (1),
- une source optique monochromatique (6),
ladite source optique (6) étant agencée de sorte à émettre un faisceau lumineux incident (12) vers l'organe de transformation optique (13), ledit organe de transformation optique étant adapté pour transformer ledit faisceau lumineux incident (12) en un faisceau lumineux sortant (14) dont la phase est modifiée par une variation de position de la pointe (2),
- un système de mesure optoélectronique (7) comprenant un capteur de déplacement ou de vitesse comportant un interféromètre optique (8),
ledit système optoélectronique (7) étant adapté pour mesurer la phase relative à une référence ou une variation de la phase du faisceau lumineux sortant (14) et pour générer, à partir de ladite mesure, un signal électrique modulé (16) correspondant au signal analogique codé dans la modulation du sillon (1),
- un dispositif de transmission optique (10) comprenant une fibre optique agencée pour transmettre le faisceau lumineux sortant (14) au système de mesure optoélectronique (7).

2. Système selon la revendication 1, **caractérisé en ce que** l'organe de transformation optique (13) comprend une surface plane réfléchissante adaptée pour réfléchir le faisceau incident (12) pour générer le faisceau de sortie (14).

3. Système selon la revendication 2, dans lequel l'aire de la surface réfléchissante de l'organe de transformation optique est comprise entre 0,02 et 0,25 mm².

4. Système selon l'une des revendications 1 à 3, **caractérisé en ce que** l'organe de transformation optique est agencé à l'extrémité du porte-pointe où se situe la pointe, sur la partie supérieure du porte-pointe, en étant orienté à 45° par rapport à la verticale.

5. Système selon l'une des revendications 1 à 4, **caractérisé en ce que** la source optique est extérieure à la cellule de lecture et **en ce qu'**il comprend une fibre optique agencée pour transmettre le faisceau incident (12) de la source vers la cellule de lecture.

6. Système selon l'une des revendications 1 à 5, adapté pour la lecture d'un signal stéréo codé sous la forme d'un sillon modulé dans une première et une seconde directions (20, 21), **caractérisé en ce qu'**il comprend deux organes de transformation optique et **en ce que** le système de mesure optoélectronique est adapté pour analyser :
- un premier faisceau sortant d'un premier organe de transformation optique (13) dont la phase est modifiée par une variation de position de la pointe dans la première direction (20), et
- un second faisceau sortant d'un second organe de transformation optique dont la phase est modifiée par une variation de position de la pointe dans la seconde direction (21).

7. Système selon la revendication 6, **caractérisé en ce qu'**il comprend deux sources optiques et deux systèmes de mesure optoélectroniques pour traiter chacun une des deux modulations (20, 21), et **en ce que** chaque organe de transformation optique comprend en outre une surface plane réfléchissante adaptée pour réfléchir respectivement le faisceau incident provenant de chaque source pour générer le faisceau de sortie respectif.

8. Système selon l'une des revendications 6 ou 7, **caractérisé en ce que** lesdites sources optiques et/ou organes de transformation optique et/ou systèmes de mesure optoélectroniques sont imbriqués de sorte à partager des composants pour générer les faisceaux lumineux incidents, pour transformer les faisceaux lumineux incidents en faisceaux lumineux sortants, pour mesurer les phases relativement à une référence et/ou les variations des phases des faisceaux lumineux sortants, et/ou pour générer les signaux électriques modulés.

9. Procédé de lecture d'un signal analogique stocké sur un support sous forme de modulation d'un sillon (1) formé dans ledit support, comprenant :
- la mise en rotation du support,
- la mise en contact d'une pointe d'une cellule de lecture (4) avec le sillon (1), ladite pointe (2) étant solidaire d'un porte-pointe (3), un organe de transformation optique (13) étant agencé sur la pointe ou sur le porte-pointe du côté de la pointe de sorte à être rigidement solidaire de la pointe, ledit porte-pointe (3) possédant deux degrés de liberté par rapport au corps de la cellule auquel il est relié, permettant à la pointe (2) de suivre les oscillations du sillon (1),
- l'émission d'un faisceau lumineux monochromatique incident (12) vers l'organe de transformation optique (13), ledit organe transformant le faisceau lumineux incident (12) en un faisceau lumineux sortant (14) dont la phase est modifiée par une variation de position de la pointe (2),
- la transmission, par un dispositif de transmission optique (10) comprenant une fibre optique, du faisceau lumineux sortant (14) à un système de mesure optoélectronique (7) comprenant un capteur de déplacement ou de vitesse comportant un interféromètre optique (8),
- la mesure, par ledit système de mesure, de la phase relativement à une référence ou d'une variation de la phase du faisceau lumineux sortant (14) et la génération, à partir de ladite mesure, d'un signal électrique modulé (16) correspondant au signal analogique codé dans la modulation du sillon (1).

10. Procédé selon la revendication 9, dans lequel la vitesse de rotation du support est de 33 tr/min ou de 45 tr/min.
